**Europäisches Patentamt**

(19) **European Patent Office**

**Office européen des brevets**

(11) Publication number : **0 251 136 B1**

(12) **EUROPEAN PATENT SPECIFICATION**

(45) Date of publication of patent specification : **11.03.92 Bulletin 92/11**

(51) Int. Cl.⁵ : **A61G 5/04**

(21) Application number : **87108979.3**

(22) Date of filing : **23.06.87**

(54) **Low slung small vehicle.**

(30) Priority : **30.06.86 JP 151424/86**

(73) Proprietor : **Yamaha Motor Co., Ltd. 2500 Shingai Iwata-shi Shizuoka-ken (JP)**

(43) Date of publication of application : **07.01.88 Bulletin 88/01**

(72) Inventor : **Hayata, Osamu 2-24-4 Aobadai Midori-ku Yokohama-shi Kanagawa-ken (JP)**

(45) Publication of the grant of the patent : **11.03.92 Bulletin 92/11**

(74) Representative : **Patentanwälte Grünecker, Kinkeldey, Stockmair & Partner Maximilianstrasse 58 W-8000 München 22 (DE)**

(84) Designated Contracting States : **DE FR GB IT**

(56) References cited :
**CH-A- 634 984**
**DE-A- 3 020 919**
**DE-A- 3 128 112**
**GB-A- 1 230 619**
**US-A- 3 204 791**
**US-A- 3 921 740**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 251 136 B1

Jouve, 18, rue Saint-Denis, 75001 PARIS

## Description

The present invention relates to a low slung small vehicle which is fit for use by a physically handicapped person or the aged with enfeebled legs and loins who utilizes a wheelchair.

Those physically handicapped persons or the aged with enfeebled legs and loins using the wheelchair who require tending by others are hoping to go out in the fields to positively render service to society if possible in the same manner as sound people are doing. If such persons can act independently, their desire appears to be attainable.

Under such circumstances, a powered vehicle suitable for free movement by those persons without receiving the aid of others has been demanded. In this case, it is especially required that these persons can easily get on and off by themselves, the stability of the car body is high, and the driving is easy. Furthermore, if they can take pleasure in acting positively with a feeling of liberation, they will feel light at heart and become more positive, which is a desirable thing.

A low slung small vehicle in accordance with the preamble of claim 1 is known from DE-A-3020919. This document shows a four-wheel vehicle for transporting handicapped persons. Each rear wheel of this vehicle is operatively connected with an electric motor. The floor of the vehicle has two separated plates, forming a ramp, which can be extended by a third person or by an electric drive unit. Using this ramp, a handicapped person can enter the vehicle with a conventional wheelchair.

The use of an extendable ramp, as it is disclosed in this document, makes the assistance of a third person necessary when the handicapped person wants to enter or leave the vehicle. Otherwise, it would be necessary to provide a complicated mechanism including a further electric drive unit, to extend the ramp automatically. Further, the solution disclosed in this document has the disadvantage that the extended ramp will make the small vehicle rather long, so that it will not be possible for the handicapped person to enter or to leave the vehicle in narrow places. Further, it is a disadvantage of the known vehicle that two separate heavy electric drive units, each having a worm gear drive, are needed.

The present invention has the object to provide a slow slung small vehicle, in which a physically handicapped person can easily get on and off by himself.

A second object of this invention is to provide in addition to said first object, a low slung small vehicle which is capable of generating a large gradeability by means of sufficient load applied to the drive wheel when a wheelchair and the aged are loaded.

A third object of the invention is to provide in addition to said first object, a low slung small vehicle which is suitable for use by the aged who do not require the wheelchair.

In accordance with the present invention, this object is solved by a low slung small vehicle having the features of claim 1.

Preferred embodiments of the slow slung small vehicle according to claim 1 are subject matter of the subclaims.

The invention is explained in detail with reference to the attached drawings:

Fig. 1 is a perspective view showing an application state of an embodiment of the present invention;
Fig. 2 is a back elevation of the vehicle;
Fig. 3 is a plan view thereof;
Figs. 4 and 5 are a plan view and a side view showing the vehicle construction, respectively;
Fig. 6 is a pneumatic system diagram;
Fig. 7 is a power system diagram;
Fig. 8 is an explanatory view showing boarding and alighting of a wheelchair;
Fig. 9 is an explanatory view showing a riding state;
Fig. 10 is a side view showing a second embodiment of the present invention;
Fig. 11 is a rear face view showing the boarding and alighting operation;
Fig. 12 is a side view of a third embodiment of the present invention;
Fig. 13 is a plan view of the embodiment shown in Fig. 12;
Fig. 14 is a side view of a fourth embodiment;
Fig. 15 is a plan view of the embodiment shown in Fig. 14; and
Fig. 16 is a rear face view of a fifth embodiment.

The reference numeral 34 designates a body formed integrally with synthetic resin, which consists of a floor face 36 in an almost plate for and a fore-riser wall 38 and right and left riser walls 40, 40 which are formed in an almost box shape surrounding continuously the front and the right and left sides of the floor face 36 and with the cross section opened downward. A fore-tube 14 and cross members 20, 22, 24 and 26 are located within the fore-riser wall 38. The upper surface of this fore-riser wall may be opened and closed by a cover plate 38a. The latter half portion of under tubes 12, 12 and side tubes 16, 16 are located in right and left riser walls 40, 40, respectively. The rear portion of the floor face 36 is opened rearward from between right and left riser walls 40, 40.

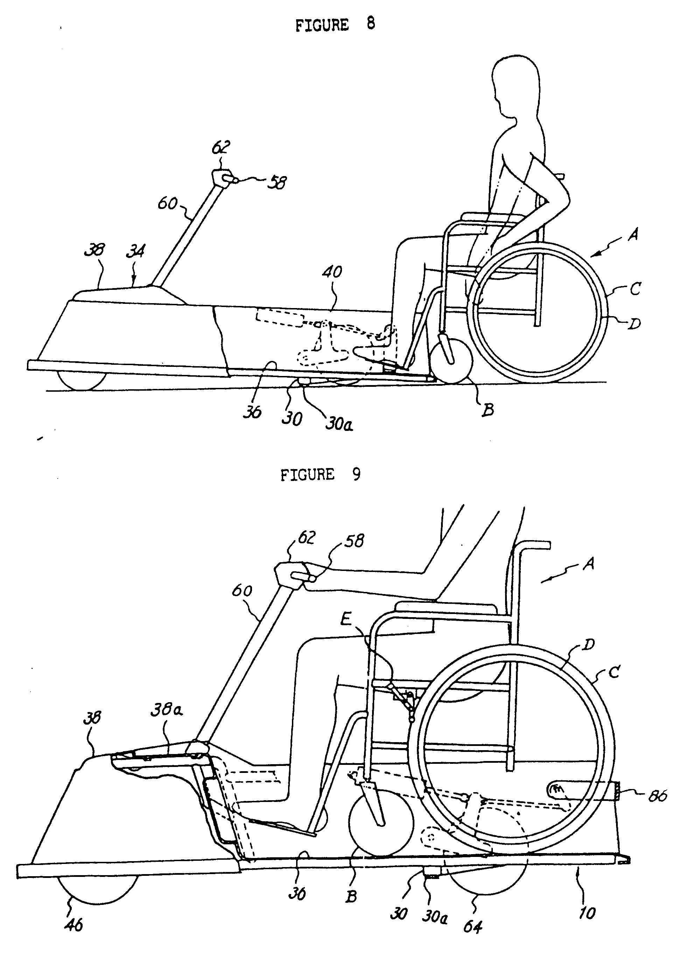

A bracket 42 in an almost longitudinally long box form is fixed to cross members 24, 26 which connect right and left fore-tubes 14, 14, and a steering shaft cylinder 44 penetrates the bracket 42 and is fixed thereto. On this steering shaft cylinder 44 is rotatably held a fore-fork 48 which supports a steering front wheel 46. The reference numeral 50 designates a handle shaft rising boarding and alighting of a wheelchair and Fig. 9 is an explanatory view showing a riding state.

The reference numeral 34 designates a body formed integrally with synthetic resin, which consists of a floor face 36 in an almost plate form and a fore-riser wall 38 and right and left riser walls 40, 40 which are formed in an almost box shape surrounding continuously the front and the right and left sides of the floor face 36 and with the cross section opened downward. A fore-tube 14 and cross members 20, 22, 24 and 26 are located within the fore-riser wall 38. The upper surface of this fore-riser wall may be opened and closed by a cover plate 18a. The latter half portion of under tubes 12, 12 and side tubes 16, 16 are located in right and left riser walls 40, 40, respectively. The rear portion of the floor face 36 is opened rearward from between right and left riser walls 40, 40.

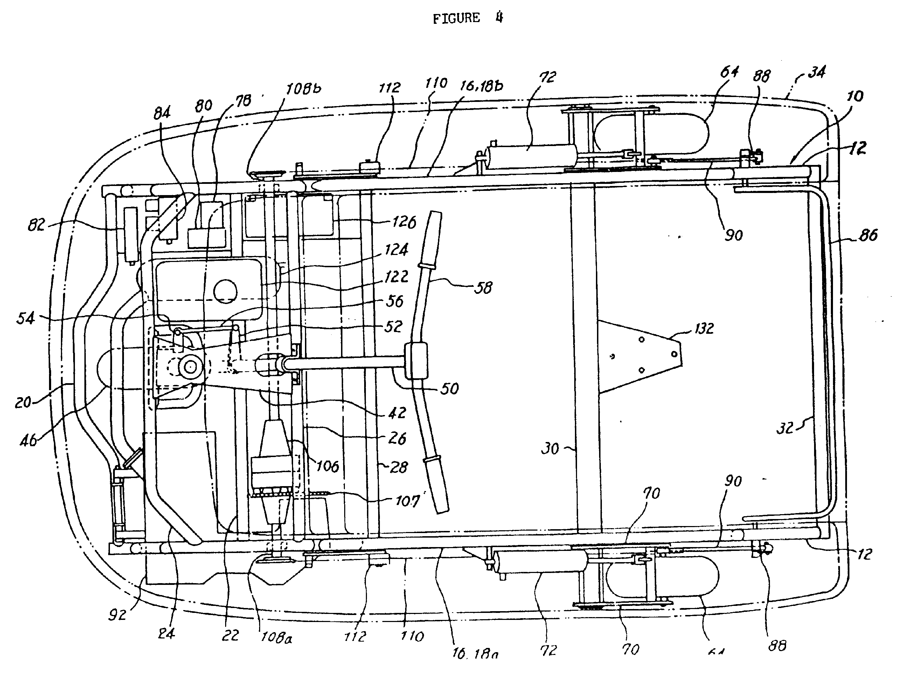

A bracket 42 in an almost longitudinally long box form is fixed to cross members 24, 26 which connect right and left fore-tubes 14, 14, and a steering shaft cylinder 44 penetrates the bracket 42 and is fixed thereto. On this steering shaft cylinder 44 is rotatably held a fore-fork 48 which supports a steering front wheel 46. The reference numeral 50 designates a handle shaft rising upward from the fore-riser wall 38, which is held by aforesaid cross members 22 and 26. Brackets 52, 54 (Fig. 4) protruded in the crosswise direction on the handle shaft 50 and the fore-fork 48, respectively, are connected with a link 56. On the handle shaft 50 is mounted a lengthwise split cover 60. Besides, the handle shaft 50 rises from the rear edge of an opening which is opened and closed by the cover plate 38a of the fore-riser wall 38, and the body 34 can be removed upward from the car body frame 10 by passing the handle bar 58 through this opening.

The reference numerals 64, 64 designate a pair of right and left rear wheels, which are contained in the right and left riser walls 40, 40 so that they may be moved vertically by means of air pressure. Since the vertical movement mechanism of this rear wheel 64 is bisymmetric, description will be made for one of them.

The cross member 30 passes underneath the right and left under tubes 12, 12 and projects sideways, and front ends of two pieces of inverted T type oscillating arms 70 are shaft-supported so as to freely move vertically, and a rear wheel 64 is held between rear ends of both oscillating arms 70. The reference numeral 72 designates an air cylinder, the front end and the rear end of which are shaft-supported at the side tube 16 and at the upper end of the oscillating arm 70, respectively.

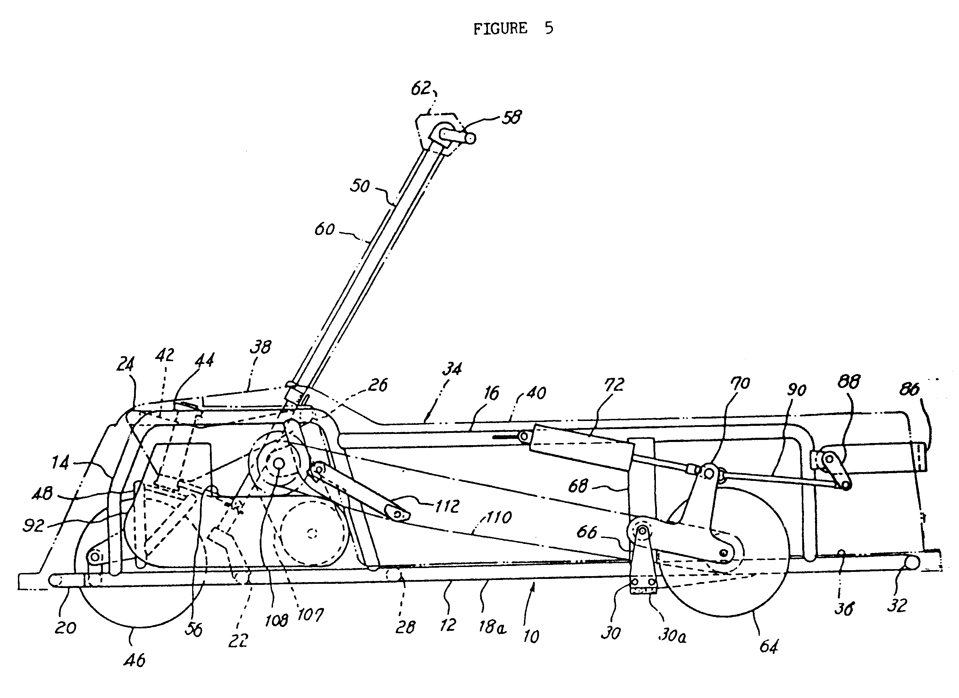

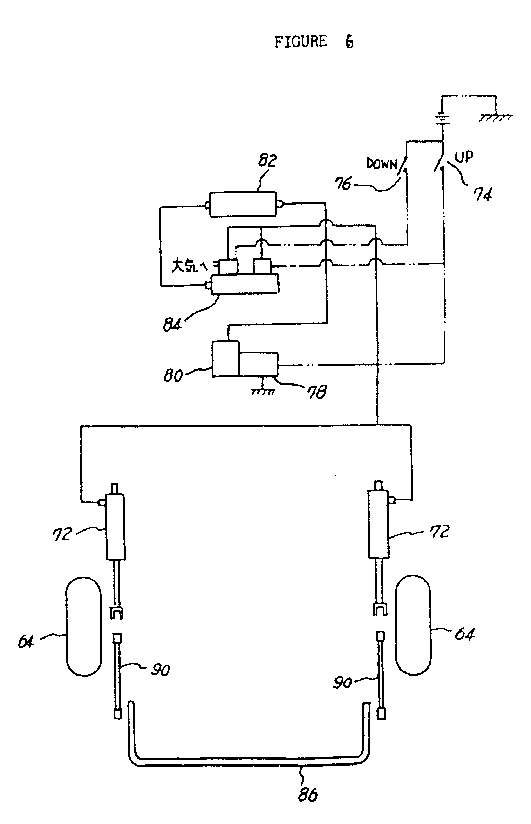

The air cylinder 72 is expanded and contracted by a pneumatic control mechanism shown in Fig. 6. In other words, an up-switch 74 and a down-switch 76 are provided on said handle cover 62, and an electric motor 78 actuates an air pump 80 when the up-switch 74 is put ON. The discharge air of this air pump 80 is fed to an electromagnetic change-over valve 84 through a strainer 82. This change-over valve 84 feeds the discharge pressure of the pump 80 to the air cylinder 72 when the up-switch 74 is put ON, and elongates the air cylinder 72. As the result, the oscillating arm 70 is rotated clockwise as it can be understood from Fig. 5, and both rear wheels 64 are protruded downward. In other words, the rear part of the car body frame 10 is parted upward from the road surface, thereby producing a state where travelling is possible.

When the down-switch 76 is put ON, the change-over valve 84 is changed over so as to let the pressure in the air cylinder 72 go into the atmospheric air. As the result, the air cylinder 72 is contracted by the weight of the car body, and both rear wheels are moved upward. In other words, the rear part of the car body frame 10 is lowered. At this time, a rubber block 30a adhered to the lower surface of the cross member 30 contacts the road surface thereby to prevent the movement of the car body. Under such a state that the rear part of the car body has been lowered, it is possible for a wheelchair A to get on board the vehicle (Fig. 8).

In this embodiment, a car stop 86 which turns with the vertical movement of the car body is provided at the rear part between right and left riser walls 40, 40. In other words, this car stop 86 is made of a rigid metal plate bent into a U-shape, and both ends thereof are rotatably fitted to right and left side tubes 16, 16. At both ends thereof are also fixed levers 88, 88, and the turning ends of both levers 88, 88 and said oscillating arms 70, 70 are connected by means of links 90, 90. As the result, under the condition that the air cylinder 72 has shrunk thereby to descend the rear part of the car body, the middle part of the car stop 86 either contacts or approaches the floor face 36 as shown in Fig. 8.

Accordingly, for boarding the wheelchair A, the wheelchair A is once stopped after the car stop 86 is ridden across with an auxiliary wheel B, and is marched further on the floor face 36. Then, the main wheel C gets over the car stop 86 and stops. Although the floor face 36 is inclined so that the rear part thereof gets lower, the wheelchair A will never run freely toward the rear on the slope of the floor face 36 by means of successive engagement of the auxiliary wheel B and the main wheel C with the car stop 86, thereby making the boarding operation easy.

When the rear part of the car body is raised from the road surface by elongating the air cylinder 72, the car stop 86 turns counterclockwise as shown in Fig. 9 and contacts the rear lower part of the main wheel C. If a parking brake E of the wheelchair A is kept applied under such a state, the wheelchair A is not only fixed by this brake E, but also its rearward movement may be securely controlled.

In addition, since the car stop 86 has a function to synchronize ascent and descent of right and left rear wheels 64, the car body will never lean on either side when the rear wheels 64 are ascended and descended by means of the air cylinder 72.

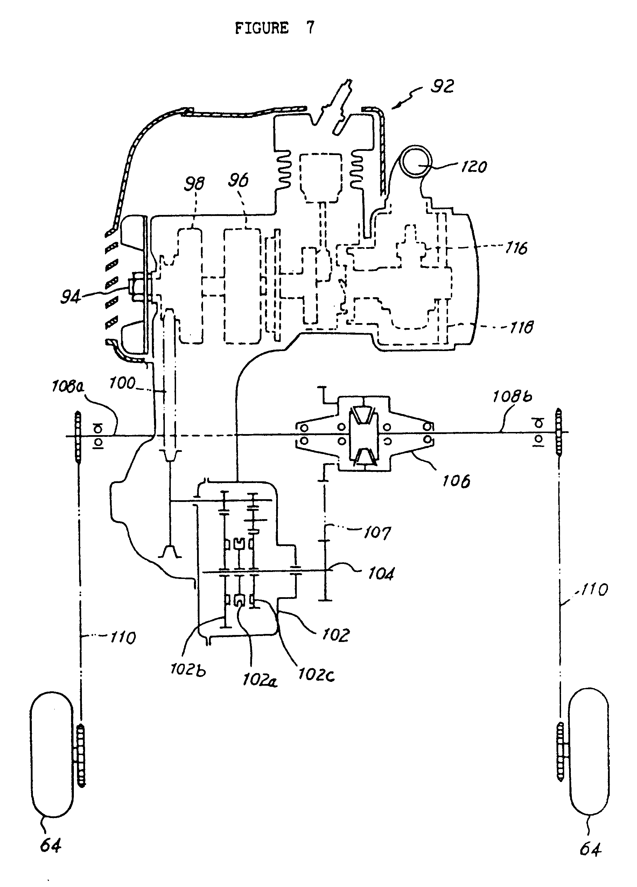

In Figs. 4 and 5, the reference numeral 92 designates a forcedly air-cooled 2-stroke gasoline engine as the travelling prime mover, which is disposed on the left side within said fore-riser wall 38. As shown in Fig. 7, this engine 92 is provided with an overhung crank shaft 94 and a magneto generator 96 and a centrifugal clutch 98, etc. provided on this crank shaft 94, and the rotation of the crank shaft 94 is transmitted to an output shaft 104 through the intermediary of the centrifugal clutch 98, a V-belt 100 and a forward and rearward change-over mechanism 102. A differential gear 106 is also disposed in the fore-riser wall 38, and the rotation of the output shaft 104 is transmitted to said differential gear 106 by means of a chain 107, and further to a pair of right and left drive shafts 108 (108a, 108b). This drive shafts 108 are provided crosswise in the fore-riser wall 38, and the rotation of each of the drive shafts 108a, 108b is transmitted to respective rear wheels 64 by means of chains 110 as the rear wheel gearing which run longitudinally through the right and left riser walls 40, 40. In Figs. 4 and 5, 112, 112 designate chain tensioners for the chains 110, 110.

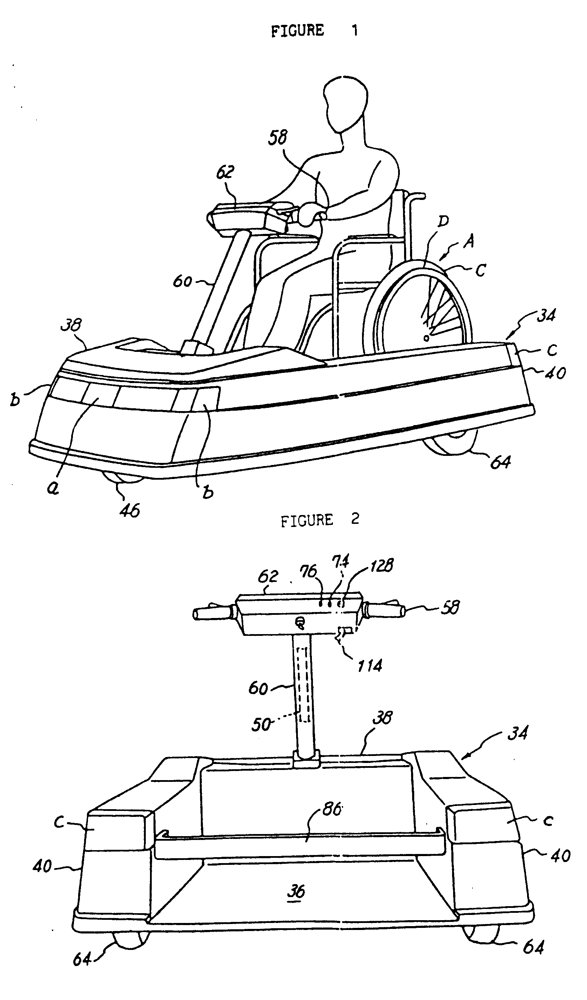

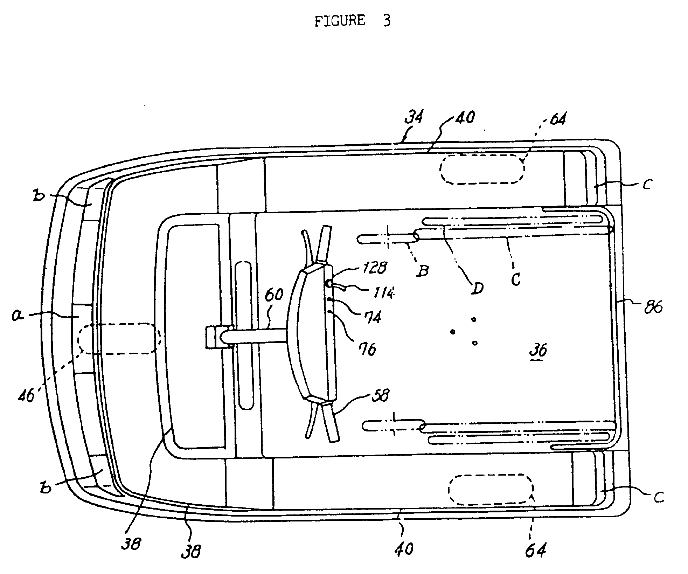

In Fig. 7, the forward and rearward change-over mechanism 102 is constituted in such a way that a slider 102a sliding axially on the output shaft 104 is made to be selectively engaged with either a forward movement gear 102b or a rearward movement gear 102c. This slider 102a is moved by, for instance, a change-over lever 114 (See Figs. 2 and 3) provided on the handle bar 58.

In Fig. 7, the reference numeral 116 designates a carburator and 118 designates a filter element. The outside air enters into an accommodation chamber of the carbureter 116 through an intake port 120, and enters into the carbureter through the element 118, and further is inhaled into the crank room through a lead valve.

In Fig. 4, the reference numeral 122 designates a fuel tank, 124, an exhaust muffler and 126, a battery.

According to this embodiment, in case of boarding in a wheelchair, the rear part of the body is lowered in advance by means of a down switch 76 provided on a handle cover 62. At this time, the car stop 86 is at the turned down position as shown in Fig. 8. Therefore, the wheelchair A gets onto the floor face 36 by riding across the car stop 86. When the up-switch 74 is put ON under such a state that the main wheel C of the wheelchair A has ridden across the car stop 86, the rear part of the car body is raised thereby making travelling possible as shown in Fig. 9. If the brake E is kept applied at this time, the wheelchair A is controlled in its movement by means of the brake E and the car stop 86 in the manner as described previously.

When a starter button 128 is pressed, the engine 92 is started by means of an electric starter (not shown). The engine 92 is accelerated by an accel built in a grip of the handle bar 58, the centrifugal clutch is connected as the rotation of the engine 92 is increased, and the rotation is transmitted to the rear wheels 64 thereby to start travel motion. Besides, it is preferred to provide the engine with a governor unit which controls the vehicle speed below a predetermined speed (for instance, 16 km/h).

The fore-riser wall 38 and the right and left riser walls 40, 40 are sufficiently lower in height than the handle bar 58. Accordingly, a driver sitting on the wheelchair can recognize easily the circumference around the body 34 thus making the driving easy, and can also enjoy driving with a feeling of liberation. In addition, the center of gravity of the car body is low due to the low height of riser walls 38, 40, thus obtaining good stability.

Since the right and left axles of the rear wheels 64 are independent from each other and the floor face 36 is positioned lower than these axles, it is accelerated to obtain lower center of gravity by making the floor face 36 lower.

In this embodiment, a tricycle including one front-wheel and the body 34 in almost a rectangular shape in a plan view have been adopted. Accordingly, the bottom faces of the body 34 on either side of the front-wheel 46 touck the road surface immediately, if the body is inclined, thus limiting the inclination very small thereby to further improve the stability.

As apparent from Figs. 8 and 9, the right and left riser walls are lower in height than the axle of the main wheel C of the wheelchair A. In general, when a hand ring D (Figs. 1, 8 and 9) fixed outside of the main wheel C is pushed by hand in case of boarding in the wheelchair A, the hand of a person of common build comes close to the axle of the main wheel C (Fig. 8). However, since the right and left riser wall 40 is lower in height than the axle of the main wheel C, the hand will never touch the riser wall 40 thereby attaining good maneuverability. Accordingly, it is feasible to narrow the body width by making the gap between the riser wall 40 and the main wheel C sufficiently small.

Furthermore, in this embodiment, under such a state that the wheelchair A is driven into, the longitudinal length of the floor face 36 has been determined so that the center of the main wheel C is located in the vicinity of the upper part of the center of the rear wheel 64 as is apparent in Figs. 3 and 9. As the result, the grounding load of the rear wheel 64 is increased, thereby making a large grade ability obtainable in case of climbing a slope and so forth. In other words, such a problem that the grade ability is too small due to insufficient front wheel load is liable to occur in case of front wheel drive, however, such a problem will never occur according to the present embodiment.

In particular, in the present embodiment, the loading location of the wheelchair A is determined, as shown clearly in Fig. 3, so that respective grounding points of the main wheel C and the auxiliary wheel B of the wheelchair A are positioned between two straight lines passing the grounding point of the front wheel 46 and the grounding points of right and left rear wheels 64. As the result, the load with the wheelchair A is always applied to the body 3 in the direction for stabilizing the car body attitude. Thus, the car body stability is further improved.

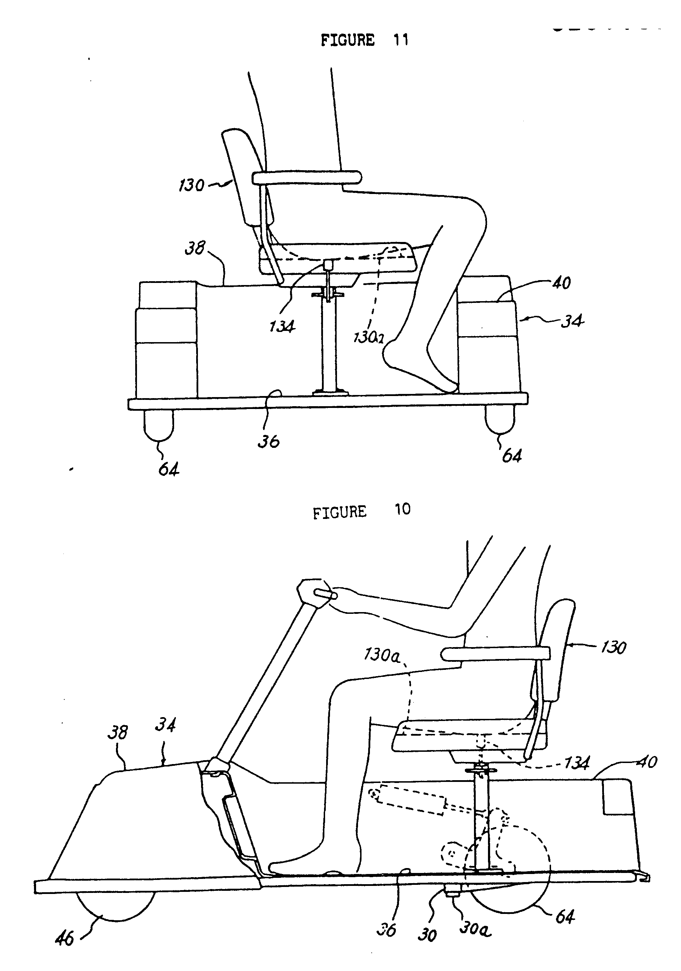

Fig. 10 is a side view showing a second embodiment of the present invention, and Fig. 11 is a rear face view showing the boarding and alighting operation. In this embodiment, a rotary seat 130 is fixed to the floor face 36. As shown in Fig. 4, a bracket 132 is fixed in advance near the center of the cross member 30, and the rotary seat 130 is fixed to this bracket 132 with the floor face 36 put in between. Besides, in this embodiment, the car stop 86 described in abovementioned embodiment has been removed.

According to this embodiment, the aged with enfeebled legs and loins, if the rear part of the car body is kept lowered as occasion demands, may get on easily through the rear part of the floor face 36 opened toward the rear and need only to lock the seat after sitting on the rotary seat 130 with one's back toward the front and then rotating the rotary seat 130 by 180° so as to face the front. The numeral 134 designates a lock lever for fixing the seat 130 at least at facing front position and facing rear position.

Besides, the right and left riser walls 40, 40 are set to such a height that the rotary seat 130 is to have an appropriate clearance downward from the front edge of the seating portion 130a thereof under such a state that the rotary seat 130 faces to the side of the body. Therefore, as shown in Fig. 11, legs, especially knees and their vicinity do not interfere with the right and left riser walls 40 in case of sitting on the rotary seat 130 and rotating it, so that it is easy to rotate the seat. Moreover, mince knees do not interfere with the riser wall 40, the riser wall 40 can be disposed sufficiently close to the rotary seat 130, so that it is possible to narrow the vehicle width to that extent.

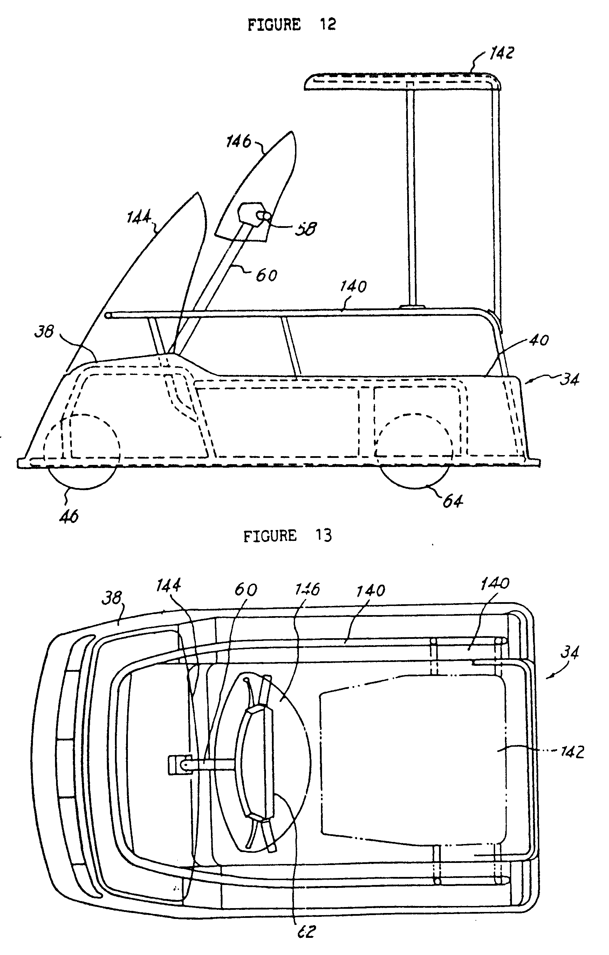

Fig. 12 is a side view of a third embodiment of the present invention, and Fig. 13 is a plan view thereof. In this embodiment, a hand rail 140 is installed at the upper location of and along the fore-riser wall 38 and the right and left riser walls 40, 40, and on this hand rail 140 is mounted a sunshade 142. Moreover, the fore-riser wall 38 and the handle bar 58 are provided with transparent windshields 144, 146. Besides, the hand rail 140 is made to rise upward from near the center of the breadth of the right and left riser walls 40, 40 so that the hand pushing the hand ring D of the wheelchair A does not interfere with the hand rail 140.

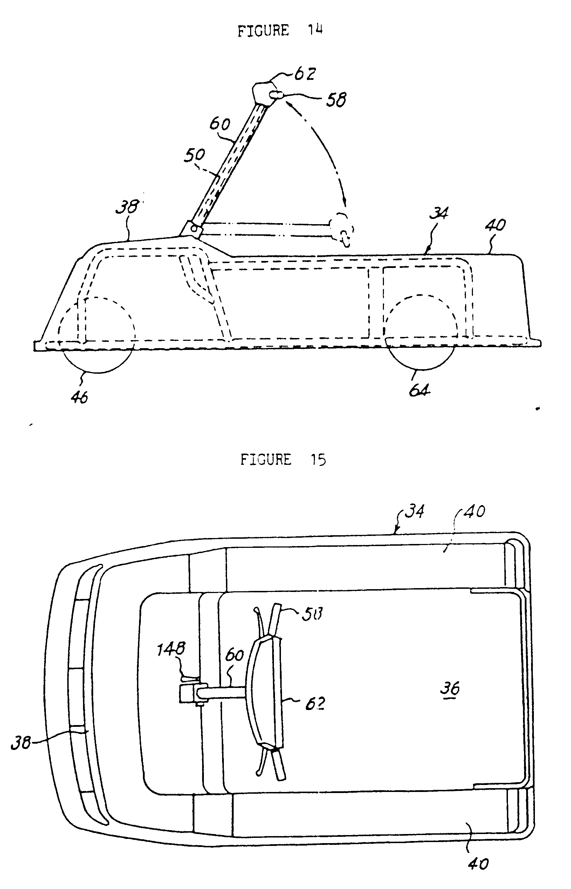

Fig. 14 is a side view of a fourth embodiment, and Fig. 15 is a plan view thereof. In this embodiment, the handle shaft 50 and the cover 60 can be brought down in the vicinity of the base. In other words, it is possible to bring the handle down at the position shown with an imaginary line in Fig. 14.

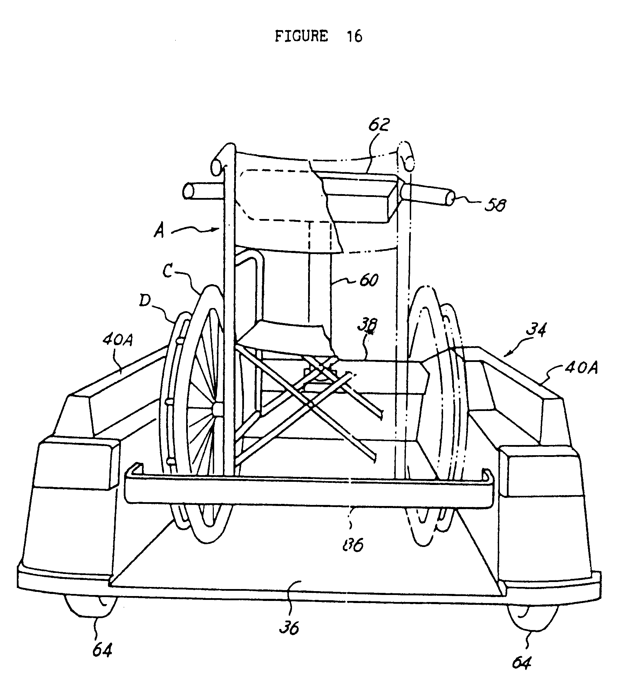

Fig. 16 is a rear face view of a fifth embodiment.

In this embodiment, only the upper edges inside the right and left riser walls 40A, 40A are made to have the height about the axle of the main wheel C of the wheelchair A and the outside upper edges are made to rise upward. According to this embodiment, although the right and left riser walls 40A are made high, the hand will not touch the riser wall 40A while handling the hand ring D of the wheelchair A. This embodiment is applicable to the case when the rotary seat is fixed to the floor face 36. In this case, such an effect is obtainable that legs do not hit against the riser wall 40A in sitting down and rotating the seat.

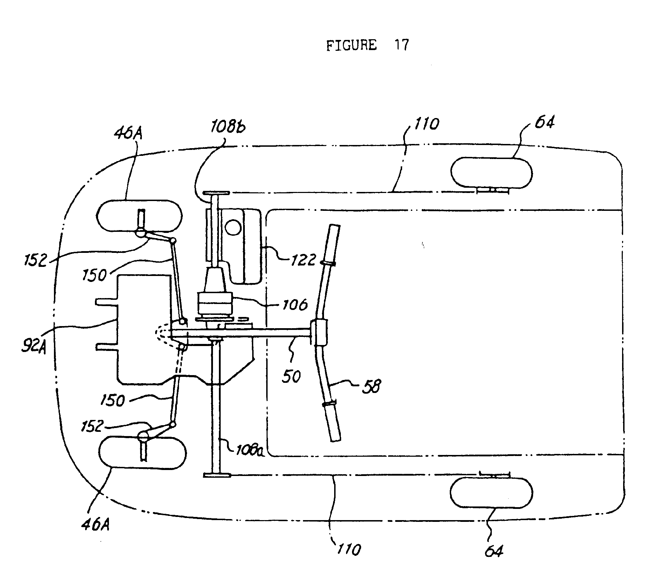

In aforesaid embodiments, a tricycle with one front wheel has been employed. However, a four-wheel car is also included in this invention. Fig. 17 is a plan view showing the layout of a sixth embodiment employing a four-wheel car. An engine 92A is disposed between the right and left steering front wheels 46A, 46A, and the turning motion of the handle shaft 50 is transmitted to nuckle brackets 152, 152 through the intermediary of a pair of right and left tie rods 150, 150.

In the drawings showing aforesaid 2nd thru 6th embodiments, the same marks are affixed to the same parts as those used in aforesaid first embodiment, and therefore, the description thereof will not be repeated.

Among abovementioned embodiments, according to an embodiment in which the rear wheel 64 is made movable vertically by means of the air cylinder 72, the rear edge of the floor face 36 approaches the road surface at the time of boarding and alighting thereby making it easier to get on and off. However, the present invention includes not only those which the rear wheel does not move vertically as described above, but also those that are provided with a leap-up type board fitted to the rear end of the floor face by means of hinges.

It is also preferable to provide the car stop 86 at the rear portion of the floor face 36 or a door which can close the rear portion while travelling and the like. However, the present invention includes those that are not provided with them.

In each of abovementioned embodiments, the engine 92 is employed as a prime mover thereby to make the travelling distance long, but an electric motor may also be utilized as the prime mover.

Besides, it is preferred to integrally form the body 36, which, however, may be assembled by collecting appropriately divided members.

Effects of the Invention:

According to the first embodiment the body is formed by surrounding the front and the right and left sides of the floor face almost continuously with the fore-riser wall and the right and left riser walls, and the prime mover is contained in the fore-riser wall.

Accordingly, the floor face can be made flat and low, and it is easy to get on and off from the rear part of the floor face opened toward the rear, which is especially convenient for boarding and alighting for the wheelchair and the aged.

In addition, the handle shaft rises upwards higher than the fore-riser wall. The center of gravity of the vehicle is low and the stability is good, and the visibility around the body is also good for the driver, thus making the driving easy. In particular, the driver may enjoy driving with feeling of liberation and refreshment.

According to the second embodiment, the differential unit and a pair of right and left drive shafts are further disposed in the fore-riser wall, and the rear wheel gearing passing longitudinally is contained in the right and left riser walls. Therefore, the rear wheels can be driven without raising the floor face, and a large grade ability can be obtained with the rear wheels having big grounding load as the driving wheels in addition to the similar effects of the first embodiment.

According to the third embodiment, a rotary seat is fixed to the floor face. Accordingly, the aged who gets on from the rear does not need to pass the side of a fixed seat to reach the front thereof, but only needs to sit down on the rotary seat facing toward the rear with his back toward the front and then to face the front by rotating the rotary seat by 180°. Thus, not only the effects according to the first embodiment are obtainable, but also an additional effect exists in that a vehicle which is suitable for use by the aged with enfeebled legs and loins who do not utilize the wheelchair becomes available.

**Claims**

1. A low slung small vehicle having a load carrying floor (36), suspended from at least a pair of rear wheels (64), and at least one dirigible front wheel (46), a body (34) comprising front walls (38) and side walls (40), said front walls and said side walls each having a generally inverted box shape and defining said floor thereunder and open at the rear of said vehicle, said front wheel (46) being supported relative to said body (34) for steering movement about a steering axis and for rotation about a rotational axis, power means fixed relative to said body and comprising an engine, **characterized in that** said engine (92) is contained within said front wall and that driving transmission means are provided, comprising a differential (106) positioned within said front wall and a pair of chains (110) each driven by an output shaft (108a,108b) of said differential (106) and extending through a respective one of said side walls for driving a respective one of said rear wheels (64) for propulsion of said vehicle, and means (70,72) for suspending said floor for pivotal movement about said rotational axis of said front wheel and for movement relative to said rear wheels from a lowered position wherein said floor is angularly disposed relative to the ground, and the rear edge of said floor is lowered to a ground touching position to a raised position wherein said floor extends substantially parallel to the ground and the rear edge thereof is above the ground.

2. A low slung small vehicle according to Claim 1, wherein one piece of steering front wheel (46) is employed.

3. A low slung small vehicle according to Claim 1, wherein two pieces of steering front wheels are employed.

4. A low slung small vehicle according to Claim 1, wherein the body (34) is integrally formed with synthetic resin.

5. A low slung small vehicle according to Claim 2, wherein the body (34) is formed in almost a rectangle in a plane view.

6. A low slung small vehicle according to Claim 1, wherein the interior width between right and left riser walls (40,40) is determined so that a wheelchair for a physically handicapped person may be boarded or alighted from the rear of the body (34) and at least the upper edges inside of right and left riser walls (40,40) are located in the vicinity of an axle of the main wheel of the wheelchair loaded on said floor.

7. A low slung small vehicle according to Claim 1, wherein respective axles of right and left rear wheels are made independent of each other and a floor (36) is positioned lower than respective axles of the rear wheels.

8. A low slung small vehicle according to Claim 1, wherein a gasoline engine (92) is employed as the prime mover.

9. A low slung small vehicle according to Claim 1, wherein an electric motor is employed as the prime mover.

10. A low slung small vehicle according to Claim 1, wherein the interior width between the right and left riser walls (40,40) is determined so that a wheelchair (A) for a physically handicapped person may be boarded or alighted from the rear of the body (34), and the longitudinal length of the floor (36) is determined so that the center of the main wheel (G) of said wheelchair (A) is positioned in the vicinity of the upper part of the center of right and left rear wheels (64,64).

11. A low slung small vehicle according to Claim 10, wherein the loading position of a wheelchair is determined so that respective grounding points of the main wheel and the auxiliary wheel (B) of the wheelchair (A) are positioned between two straight lines passing the grounding point of the steering front wheel and the grounding points of the right and left rear wheels.

12. A low slung small vehicle according to Claim 1, comprising a rotary seat (130) fitted onto said floor (136).

13. A low slung small vehicle according to Claim 12, wherein at least inside upper edges of above said right and left riser walls (40,40) are fixed at a height where above said rotary seat (130) is positioned downward of the upper edge of the seating portion thereof at an appropriate clearance under such a state that the rotary seat faces in the crosswise direction in the body.

**Patentansprüche**

1. Ein niedrig bauendes kleines Fahrzeug mit einem lasttragenden Boden (36), welcher an zumindest einem Paar von Hinterrädern (64) aufgehängt ist und welches zumindest ein lenkbares Vorderrad (46) aufweist, einer Karosserie (34), welche Vorderwände (38) und Seitenwände (40) umfaßt, wobei diese Vorderwände und diese Seitenwände jeweils eine im wesentlichen umgedrehte Kastenform aufweisen und darunter diesen Boden ausbilden, wobei das Fahrzeug an seinem hinteren Ende offen ist, und wobei dieses Vorderrad (46) relativ zu dieser Karosserie (34) abgestützt ist, um eine Lenkbewegung um eine Lenkachse ausführen zu können, und um sich um eine Rotationsachse drehen zu können, Antriebseinrichtungen, welche in bezug auf diese Karosserie befestigt sind und welche einen Motor aufweisen, **dadurch gekennzeichnet**, daß dieser Motor (92) innerhalb dieser vorderen Wand angeordnet ist und daß Kraftübertragungseinrichtungen vorgesehen sind, beinhaltend ein Differential (106), welches innerhalb dieser Vorderwand angeordnet ist und ein Paar von Ketten (110), welche jeweils durch eine Ausgangswelle (108a, 108b) dieses Differentials (106) angetrieben sind, und welche sich durch eine der entsprechenden Seitenwände erstrecken, um eines der entsprechenden Hinterräder (64) zur Fortbewegung dieses Fahrzeuges anzutreiben, sowie Mittel (70, 72), um diesen Boden für eine schwenkbare Bewegung um diese Rotationsachse dieses Vorderrades und für eine Bewegung in bezug auf diese hinteren Räder abzustützen, und zwar von einer abgesenkten Position, bei welcher dieser Boden winkelmäßig in bezug auf den Erdboden angeordnet ist und wobei diese hintere Kante dieses Bodens in eine Position abgesenkt ist, in welcher sie den Erdboden berührt, in eine angehobene Position, wobei sich dieser Boden im wesentlichen parallel zu dem Erdboden erstreckt und diese hintere Kante des Bodens sich über dem Erdboden befindet.

2. Ein niedrig bauendes Fahrzeug gemäß Anspruch 1, wobei ein einzelnen Vorderrad (46) vorgesehen ist.

3. Ein niedrig bauendes Fahrzeug gemäß Anspruch 1, wobei zwei lenkbare Vorderräder vorgesehen sind.

4. Ein niedrig bauendes Fahrzeug gemäß Anspruch 1, wobei die Karosserie (34) einstückig aus Kunstharz geformt ist.

5. Ein niedrig bauendes Fahrzeug gemäß Anspruch 2, wobei diese Karosserie (34) in der Draufsicht im wesentlichen rechteckig ausgebildet ist.

6. Ein niedrig bauendes Fahrzeug gemäß Anspruch 1, wobei die innere Breite zwischen den rechten und linken erhobenen Wänden (40,40) derart bestimmt ist, daß ein Rollstuhl für körperlich behinderte Personen von der hinteren Seite der Karosserie (34) aus auf das Fahrzeug gebracht werden kann, und wobei zumindest die oberen inneren Kanten dieser rechten und linken erhobenen Wände (40, 40) in der Nähe einer Achse eines Hauptrades eines Rollstuhles angeordnet sind, welcher auf diesem Boden steht.

7. Ein niedrig bauendes Fahrzeug gemäß Anspruch 1, wobei die entsprechenden Achsen der rechten und linken Hinterräder unabhängig voneinander gestaltet sind und der Boden (36) niedriger angeordnet ist als die entsprechenden Achsen der Hinterräder.

8. Ein niedrig bauendes Fahrzeug gemäß Anspruch 1, wobei ein Benzinmotor (92) als Hauptantriebsquelle verwendet wird.

9. Ein niedrig bauendes Fahrzeug gemäß Anspruch 1, wobei ein Elektromotor als Hauptantriebsquelle verwendet wird.

10. Ein klein bauendes Fahrzeug gemäß Anspruch 1, wobei die innere Breite zwischen der rechten und der linken erhobenen Wand (40, 40) derart bestimmt ist, daß ein Rollstuhl (A) für eine physisch behinderte Person vom hinteren Teil der Karosserie (34) aus aufgeladen oder entladen werden kann, und wobei die Länge des Bodens (36) derart bestimmt ist, so daß der Mittelpunkt des Hauptrades (G) dieses Rollstuhles (A) in der Nähe des oberen Teiles des Zentrums der rechten und linken Hinterräder (64, 64) positioniert ist.

11. Ein niedrig bauendes Fahrzeug gemäß Anspruch 10, wobei die Ladeposition eines Rollstuhles derart bestimmt ist, daß die entsprechenden Bodenberührungspunkte des Hauptrades und des Hilfsrades (B) des Rollstuhls (A) zwischen zwei geraden Linien positioniert sind, welche den Erdberührungspunkt des lenkbaren Vorderrades und die Erdberührungspunkte des rechten und linken Hinterrades verlaufen.

12. Ein niedrig bauendes Fahrzeug gemäß Anspruch 1, welches einen drehbaren Sitz (130) aufweist, der auf diesem Boden (136) angeordnet ist.

13. Ein niedrig bauendes Fahrzeug gemäß Anspruch 12, wobei zumindest die oberen inneren Kanten dieser erhobenen rechten und linken Wand (40, 40) in einer derartigen Höhe angeordnet sind, das sie niedriger positioniert sind, als die obere Kante des Sitzteiles dieses drehbaren Sitzes (130), und zwar mit einem geeigneten Zwischenraum in einem Zustand, in dem der drehbare Sitz in Querrichtung der Karosserie ausgerichtet ist.

**Revendications**

1. Petit véhicule de faible hauteur ayant un plancher (36) porteur de charge, suspendu à au moins une paire de roues arrière (64), et au moins une roue avant dirigeable (46), une carrosserie (34) comprenant des parois avant (38) et des parois latérales (40), lesdites parois avant et lesdites parois latérales ayant chacune une forme globalement de boîte renversée et définissant ledit plancher en-dessous et ouvertes à l'arrière dudit véhicule, ladite roue avant (46) étant supportée par rapport à ladite carrosserie (34) pour effectuer un mouvement directeur autour d'un axe de direction et pour tourner autour d'un axe de rotation, des moyens moteurs fixés par rapport à ladite carrosserie et comprenant un moteur, caractérisé en ce que ledit moteur (92) est logé à l'intérieur de ladite paroi avant et en ce que sont prévus des moyens de transmission de commande, comprenant un différentiel (106) placé à l'intérieur de ladite paroi avant et une paire de chaînes (110) entraînées chacune par un arbre de sortie (108a, 108b) dudit différentiel (106) et s'étendant à travers une paroi respective desdites parois latérales pour entraîner une roue respective desdites roues arrière (64) pour la propulsion dudit véhicule, et des moyens (70, 72) pour suspendre ledit plancher pour effectuer un mouvement pivotant autour dudit axe de rotation de ladite roue avant et pour se déplacer par rapport auxdites roues arrière depuis une position abaissée dans laquelle ledit plancher est disposé de façon angulaire par rapport au sol, et le bord arrière dudit plancher est abaissé jusqu'à une position touchant le sol, vers une position levée dans laquelle ledit plancher s'étend de façon sensiblement parallèle au sol et son bord arrière est au-dessus du sol.

2. Petit véhicule de faible hauteur selon la revendication 1, dans lequel une seule roue avant directrice (46) est employée.

3. Petit véhicule de faible hauteur selon la revendication 1, dans lequel deux roues avant directrices sont employées.

4. Petit véhicule de faible hauteur selon la revendication 1, dans lequel la carrosserie (34) est formée d'une seule pièce en résine synthétique.

5. Petit véhicule de faible hauteur selon la revendication 2, dans lequel la carrosserie (34) a à peu près la forme d'un rectangle en vue en plan.

6. Petit véhicule de faible hauteur selon la revendication 1, dans lequel la largeur intérieure entre les parois montantes droite et gauche (40, 40) est déterminée de telle sorte qu'un fauteuil roulant pour une personne handicapée physique puisse être chargé ou descendu par l'arrière de la carrossserie (34) et au moins les bords supérieurs intérieurs des parois montantes droite et gauche (40, 40) sont situés à proximité d'un axe de la roue motrice du fauteuil roulant chargé sur ledit plancher.

7. Petit véhicule de faible hauteur selon la revendication 1, dans lequel les axes respectifs des roues arrière droite et gauche sont indépendants l'un de l'autre et un plancher (36) est placé plus bas que les axes respectifs des roues arrière.

8. Petit véhicule de faible hauteur selon la revendication 1, dans lequel un moteur à essence (92) est utilisé comme machine motrice.

9. Petit véhicule de faible hauteur selon la revendication 1, dans lequel un moteur électrique est employé comme machine motrice.

10. Petit véhicule de faible hauteur selon la revendication 1, dans lequel la largeur intérieure entre les parois montantes droite et gauche (40, 40) est déterminée pour qu'un fauteuil roulant (A) pour une personne handicapée physique puisse être chargé ou descendu par l'arrière de la carrosserie (34), et la longueur du plancher (36) est déterminée pour que le centre de la roue motrice (G) dudit fauteuil roulant (A) soit placé à proximité de la partie supérieure du centre des roues arrière droite et gauche (64, 64).

11. Petit véhicule de faible hauteur selon la revendication 10, dans lequel la position de chargement d'un fauteuil roulant est déterminée pour que les points de contact au sol respectifs de la roue motrice et de la roue auxiliaire (B) du fauteuil roulant (A) soient placés entre deux lignes droites croisant le point de contact au sol de la roue avant directrice et les points de contact au sol des roues arrière droite et gauche.

12. Petit véhicule de faible hauteur selon la revendication 1, comprenant un siège tournant (130) fixé sur ledit plancher (136).

13. Petit véhicule de faible hauteur selon la revendication 12, dans lequel au moins les bords supérieurs intérieurs desdites parois montantes droite et gauche (40, 40) sont fixés à une hauteur où ledit siège tournant (130) est placé vers le bas du bord supérieur de sa partie d'assise à une distance appropriée lorsque le siège tournant est orienté dans le sens de la largeur de la carrosserie.

FIGURE 1

FIGURE 2

FIGURE 3

FIGURE 4

FIGURE 5

EP 0 251 136 B1

FIGURE 6

大気へ

FIGURE 7

FIGURE 8

FIGURE 9

FIGURE 11

FIGURE 10

FIGURE 12

FIGURE 13

FIGURE 14

FIGURE 15

FIGURE 16

FIGURE 17